# EUROPEAN PATENT APPLICATION

(11) **EP 2 711 945 A1**
(43) Date of publication of application: **26.03.2014**
(21) Application number: 11865603.2
(22) Date of filing: 19.05.2011
(51) Int. Cl.: H01F 38/14

(54) **POWER-RECEPTION DEVICE, POWER-TRANSMISSION DEVICE, AND POWER-TRANSFER SYSTEM**

(71) Applicant: Toyota Jidosha Kabushiki Kaisha, Toyota-shi, Aichi 471-8571 (JP)
(72) Inventor: ICHIKAWA, Shinji, Toyota-shi Aichi 471-8571 (JP); HORIUCHI, Satoru, Toyota-shi Aichi 471-8571 (JP)
(74) Representative: Winter, Brandl, Fürniss, Hübner, Röss, Kaiser, Polte - Partnerschaft
(86) International application number: PCT/JP2011/061538
(87) International publication number: WO 2012/157114

(57) **Abstract**

A power reception device comprising: a shield (45) including a main surface portion and a circumferential wall portion connected to a circumferential edge of the main surface portion, and having an opening in a position opposite to the main surface portion; a lid portion (46) formed to cover the opening; a mounted resonant portion (27) arranged within the shield (45), and resonating, through an electromagnetic field, with a facility-side resonant portion (28) provided in an external facility; and a holding portion (48) connecting the lid portion (46) and the main surface portion, and supporting the mounted resonant portion (27).

## Description

### TECHNICAL FIELD

The present invention relates to a power reception device, a power transmission device and a power transfer system.

### BACKGROUND ART

In recent years, in consideration of the environment, attention has been focused on a hybrid vehicle, an electric vehicle or the like that uses electric power from a battery and the like to drive a driving wheel.

Particularly, attention has been focused in recent years on wireless charging by which the battery can be charged in a contactless manner without using a plug and the like in the aforementioned electrically powered vehicle having the battery mounted thereon. Various types of contactless charging methods have been suggested recently, and the technique of using the resonance phenomenon to transfer electric power in a contactless manner has been particularly in the spotlight.

A wireless power transfer system using electromagnetic resonance includes a wireless power transfer system described in, for example, Japanese Patent Laying-Open No. 2010-73976. This wireless power transfer system includes a power feeding device having a power feeding coil, and a power reception device having a power reception coil. Electric power is transferred between the power feeding coil and the power reception coil by using the electromagnetic resonance.

A contactless power transmission device described in Japanese Patent Laying-Open No. 2010-87353 includes a secondary self-resonant coil that can receive electric power from a primary self-resonant coil through an electromagnetic field, a bobbin to which the secondary self-resonant coil is attached, and a shield containing the secondary self-resonant coil and the bobbin. In this contactless power transmission device as well, electric power is transferred between the secondary self-resonant coil and the primary self-resonant coil by using the electromagnetic field resonance.

Many contactless power feeding systems that transfer electric power by using the electromagnetic resonance have been developed in recent years, as disclosed in Japanese Patent Laying-Open No. 2010-154700, Japanese Patent Laying-Open No. 2010-98807, Japanese Patent Laying-Open No. 2010-73885, Japanese Patent Laying-Open No. 2010-267917 and the like.

### CITATION LIST

### PATENT DOCUMENT

PTD 1: Japanese Patent Laying-Open No. 2010-73976
PTD 2: Japanese Patent Laying-Open No. 2010-87353
PTD 3: Japanese Patent Laying-Open No. 2010-154700
PTD 4: Japanese Patent Laying-Open No. 2010-98807
PTD 5: Japanese Patent Laying-Open No. 2010-73885
PTD 6: Japanese Patent Laying-Open No. 2010-267917

### SUMMARY OF INVENTION

### TECHNICAL PROBLEM

As for the wireless power transfer system described in Japanese Patent Laying-Open No. 2010-73976, there is no suggestion about how to ensure the strength of the power reception device and the power transmission device when the system is practically applied to the power reception device and the power transmission device.

The contactless power transmission device described in Japanese Patent Laying-Open No. 2010-87353 and the like includes a box-shaped shield having an opening, a self-resonant coil arranged within the shield, a tubular bobbin to which the self-resonant coil is attached, and a closing member for closing the opening of the shield.

However, the bobbin is not arranged to couple the bottom of the shield and the closing member, and thus, the stiffness of the device itself is low.

The present invention has been made in view of the aforementioned problems and an object thereof is to provide a power reception device, a power transmission device and a power transfer system having improved stiffness.

### SOLUTION TO PROBLEM

A power reception device according to the present invention includes: a shield including a main surface portion and a circumferential wall portion connected to a circumferential edge of the main surface portion, and having an opening in a position opposite to the main surface portion; a lid portion formed to cover the opening; a mounted resonant portion arranged within the shield, and resonating, through an electromagnetic field, with a facility-side resonant portion provided in an external facility; and a holding portion connecting the lid portion and the main surface portion, and supporting the mounted resonant portion.

Preferably, the facility-side resonant portion includes a first resonant coil, and the mounted resonant portion includes a second resonant coil. The second resonant coil is held by the holding portion. An area of a portion where the second resonant coil is in contact with the holding portion is smaller than an area of a portion where the second resonant coil is not in contact with the holding portion.

Preferably, the facility-side resonant portion includes a first resonant coil, and the mounted resonant portion includes a second resonant coil. The holding portion includes a plurality of support shaft portions arranged annularly along the second resonant coil, and the second resonant coil is supported by the plurality of support shaft portions.

Preferably, the lid portion is made of a first resin material, and the support shaft portions are made of a second resin material. A dielectric tangent of the second resin material is smaller than a dielectric tangent of the first resin material. Preferably, the lid portion is made of a first resin material, and the support shaft portions are made of a second resin material. A strength of the first resin material is higher than a strength of the second resin material.

Preferably, the holding portion includes the plurality of support shaft portions arranged annularly along an inner circumference of the second resonant coil and supporting the second resonant coil, and a first wall portion formed to connect inner circumferential portions of the plurality of support shaft portions arranged annularly, and the first wall portion extending in an arrangement direction of the support shaft portions. The power reception device further includes: a second wall portion arranged between an inner circumferential surface of the shield and the second resonant coil; and a cooling medium supply portion for supplying a cooling medium to a path formed between the first wall portion and the second wall portion.

Preferably, the holding portion includes the plurality of support shaft portions arranged annularly along an outer circumference of the second resonant coil and supporting the second resonant coil, and a third wall portion formed to connect outer circumferential portions of the plurality of support shaft portions arranged annularly, and the third wall portion extending in an arrangement direction of the support shaft portions. The power reception device further includes: a fourth wall portion arranged inside the third wall portion and spaced apart from the third wall portion; and a cooling medium supply portion for supplying a cooling medium to a path formed between the third wall portion and the fourth wall portion.

A power transmission device according to the present invention includes: a shield including a main surface portion and a circumferential wall portion connected to a circumferential edge of the main surface portion, and having an opening in a position opposite to the main surface portion; a lid portion formed to cover the opening; a facility-side resonant portion arranged within the shield, and resonating, through an electromagnetic field, with a mounted resonant portion mounted on a vehicle; and a holding portion connecting the lid portion and the main surface portion, and supporting the mounted resonant portion.

Preferably, the facility-side resonant portion includes a first resonant coil, and the mounted resonant portion includes a second resonant coil. An area of a portion where the first resonant coil is in contact with the holding portion is smaller than an area of a portion where the first resonant coil is not in contact with the holding portion.

Preferably, the facility-side resonant portion includes a first resonant coil, and the mounted resonant portion includes a second resonant coil. The holding portion includes a plurality of support shaft portions arranged annularly along the first resonant coil, and the first resonant coil is supported by the plurality of support shaft portions.

Preferably, the lid portion is made of a first resin material, and the support shaft portions are made of a second resin material. A dielectric tangent of the second resin material is smaller than a dielectric tangent of the first resin material. Preferably, the lid portion is made of a first resin material, and the support shaft portions are made of a second resin material. A strength of the first resin material is higher than a strength of the second resin material.

Preferably, the holding portion includes the plurality of support shaft portions arranged annularly along an inner circumference of the first resonant coil and supporting the first resonant coil, and a first wall portion formed to connect inner sides of the plurality of support shaft portions arranged annularly, and the first wall portion extending in an arrangement direction of the support shaft portions. The power transmission device further includes: a second wall portion arranged between an inner circumferential surface of the shield and the facility-side resonant portion; and a cooling medium supply portion for supplying a cooling medium to a path formed between the first wall portion and the second wall portion.

Preferably, the holding portion includes the plurality of support shaft portions arranged annularly along an outer circumference of the first resonant coil and supporting the first resonant coil, and a third wall portion formed to connect outer sides of the plurality of support shaft portions arranged annularly, and the third wall portion extending in an arrangement direction of the support shaft portions. The power transmission device further includes: a fourth wall portion extending between an inner circumferential surface of the shield and the third wall portion; and a cooling medium supply portion for supplying a cooling medium to a path formed between the third wall portion and the fourth wall portion.

A power transfer system according to the present invention includes: a power transmission device having a facility-side resonant portion, a facility-side shield containing the facility-side resonant portion therein and having a first opening, a first lid member formed to close the first opening, and a first holding portion arranged within the facility-side shield and supporting the facility-side resonant portion; and a vehicle-side resonant portion having a vehicle-side resonant portion resonating with the facility-side resonant portion through an electromagnetic field, a vehicle-side shield containing the vehicle-side resonant portion therein and having a second opening, a second lid member formed to close the second opening, and a second holding portion arranged within the vehicle-side shield and supporting the vehicle-side resonant portion. The facility-side shield includes a bottom surface portion and a first circumferential wall portion formed to rise from an outer circumferential edge of the bottom surface portion, and the first holding portion is provided to support the bottom surface portion and the first lid member. The vehicle-side shield includes a top plate portion and a second circumferential wall portion formed to hang down from an outer circumferential edge of the top plate portion. The second holding portion is provided to support the top plate portion and the second lid member. Preferably, the first lid member is formed to have a thickness larger than a thickness of the second lid member.

Preferably, the facility-side resonant portion includes a first resonant coil, and the vehicle-side resonant portion includes a second resonant coil. The first holding portion includes a plurality of first support shaft portions arranged along the first resonant coil and supporting the first resonant coil, and the second holding portion includes a plurality of second support shaft portions arranged along the second resonant coil and supporting the second resonant coil. A cross-sectional area of the first support shaft portions is larger than a cross-sectional area of the second support shaft portions.

### ADVANTAGEOUS EFFECTS OF INVENTION

In the power reception device, the power transmission device and the power transfer system according to the present invention, the stiffness of the devices themselves can be ensured.

### BRIEF DESCRIPTION OF DRAWINGS

Fig. 1 is a schematic view schematically showing a power reception device, a power transmission device and a power transfer system according to a first embodiment.
Fig. 2 is a schematic view for describing the principle of power transmission and power reception by a resonance method, and the principle of power transmission and power reception by the resonance method will be described with reference to this Fig. 2.
Fig. 3 is a diagram showing the relationship between the distance from a current source (a magnetic current source) and the intensity of the electromagnetic field.
Fig. 4 is a side view, partially in section, of a power reception device 40.
Fig. 5 is an exploded perspective view of power reception device 40.
Fig. 6 is a side view, partially in section, schematically showing a power transmission device 41.
Fig. 7 is an exploded perspective view of power transmission device 41.
Fig. 8 is a side view, partially in section, showing power reception device 40 according to a second embodiment.
Fig. 9 is an exploded perspective view of power reception device 40.
Fig. 10 is a side view, partially in section, of power transmission device 41.
Fig. 11 is an exploded perspective view of power transmission device 41.
Fig. 12 is a side view, partially in section, showing power reception device 40 according to a third embodiment.
Fig. 13 is an exploded perspective view of power reception device 40 shown in Fig. 12.
Fig. 14 is a cross-sectional view of power transmission device 41 according to the third embodiment.
Fig. 15 is an exploded perspective view of power transmission device 41 according to the third embodiment.
Fig. 16 is an exploded perspective view of power reception device 40 according to a modification.
Fig. 17 is an exploded perspective view showing power transmission device 41 according to the modification.
Fig. 18 is an exploded perspective view showing power reception device 40 according to a second modification.
Fig. 19 is an exploded perspective view showing power transmission device 41 according to the second modification.

### DESCRIPTION OF EMBODIMENTS

### (First Embodiment)

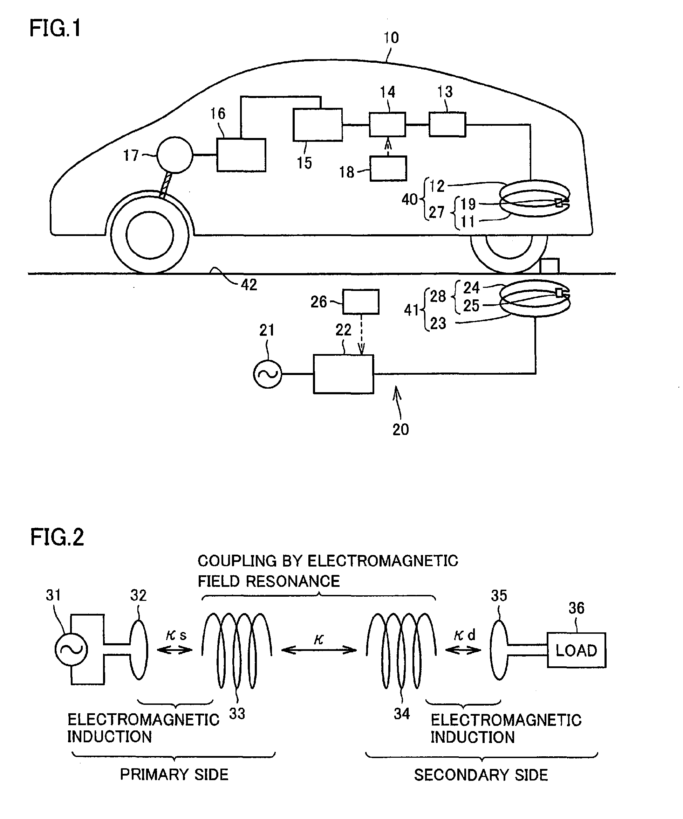

A power reception device, a power transmission device and a power transfer system including these power transmission device and power reception device according to a first embodiment of the present invention will be described with reference to Figs. 1 to 7. Fig. 1 is a schematic view schematically showing the power reception device, the power transmission device and the power transfer system according to the first embodiment.

The power transfer system according to the first embodiment has an electrically powered vehicle 10 including a power reception device 40, and an external power feeding apparatus 20 including a power transmission device 41. When electrically powered vehicle 10 stops at a prescribed position in a parking space 42 where power transmission device 41 is provided, power reception device 40 of electrically powered vehicle 10 mainly receives electric power from power transmission device 41.

Parking space 42 is provided with a wheel block and a line for causing electrically powered vehicle 10 to stop at the prescribed position.

External power feeding apparatus 20 includes a high-frequency power driver 22 connected to an AC power supply 21, a control unit 26 for controlling driving of high-frequency power driver 22 and the like, and power transmission device 41 connected to high-frequency power driver 22. Power transmission device 41 includes a power transmission-side resonant portion 28 and a facility-side electromagnetic induction coil 23. Power transmission-side resonant portion 28 includes a facility-side resonant coil 24 and a facility-side capacitor 25 connected to facility-side resonant coil 24. Facility-side electromagnetic induction coil 23 is electrically connected to high-frequency power driver 22. Although facility-side capacitor 25 is provided in this example shown in Fig. 1, facility-side capacitor 25 is not necessarily essential.

AC power supply 21 is a power supply external to the vehicle, and for example, a system power supply. High-frequency power driver 22 converts electric power received from AC power supply 21 into high-frequency electric power and supplies the converted high-frequency electric power to facility-side electromagnetic induction coil 23. It is to be noted that the high-frequency electric power generated by high-frequency power driver 22 has a frequency of, for example, 1 MHz to several tens of MHz.

Supply of the aforementioned high-frequency electric power to facility-side electromagnetic induction coil 23 results in change over time in an amount of magnetic flux generated from facility-side electromagnetic induction coil 23.

Facility-side resonant coil 24 is electromagnetic inductively coupled to facility-side electromagnetic induction coil 23. As a result of the change in the amount of magnetic flux generated from facility-side resonant coil 24, a high-frequency current flows through facility-side resonant coil 24 as well due to electromagnetic induction.

At this time, the current is supplied to facility-side electromagnetic induction coil 23 such that a frequency of the high-frequency current flowing through facility-side resonant coil 24 substantially matches a resonance frequency determined by a reluctance of facility-side electromagnetic induction coil 23 and a capacitance of facility-side capacitor 25 and a self capacitance of facility-side resonant coil 24. Facility-side resonant coil 24 and facility-side capacitor 25 function as a serial LC resonator (resonant portion).

Then, an electric field and a magnetic field having a frequency that is substantially the same as the resonance frequency are formed around facility-side resonant coil 24. In this way, an electromagnetic field having a prescribed frequency is formed around facility-side resonant coil 24.

Electrically powered vehicle 10 includes power reception device 40, a rectifier 13 connected to power reception device 40, a DC/DC converter 14 connected to rectifier 13, a battery 15 connected to DC/DC converter 14, a power control unit (PCU) 16, a motor unit 17 connected to power control unit 16, and a vehicle ECU (Electronic Control Unit) 18 for controlling driving of DC/DC converter 14, power control unit 16 and the like.

Although electrically powered vehicle 10 according to the present embodiment is a hybrid vehicle including a not-shown engine, electrically powered vehicle 10 may also be an electric vehicle or a fuel cell vehicle as long as it is driven by a motor.

Power reception device 40 includes a power reception-side resonant portion 27 and a vehicle-side electromagnetic induction coil 12, and power reception-side resonant portion 27 includes a vehicle-side resonant coil 11 and a vehicle-side capacitor 19. Power reception-side resonant portion 27 is a serial LC resonator formed by vehicle-side resonant coil 11 and vehicle-side capacitor 19. A resonance frequency of power reception-side resonant portion 27 substantially matches a resonance frequency of power transmission-side resonant portion 28.

The alternating current having a frequency that is the same as the resonance frequency flows through power transmission-side resonant portion 28, and thereby the electromagnetic field is formed around facility-side resonant coil 24 of power transmission-side resonant portion 28. Since vehicle-side resonant coil 11 is arranged within a prescribed range from facility-side resonant coil 24, the current flows through vehicle-side resonant coil 11 by the aforementioned electromagnetic field.

Since the resonance frequency of power transmission-side resonant portion 28 substantially matches the resonance frequency of power reception-side resonant portion 27, the electric power is excellently supplied to vehicle-side resonant coil 11. As described above, power reception-side resonant portion 27 and power transmission-side resonant portion 28 resonate with each other through the electromagnetic field, and vehicle-side resonant coil 11 receives the electric power. It is to be noted that vehicle-side resonant coil 11 is arranged within a near field (evanescent field) of the electromagnetic field formed around facility-side resonant coil 24, and receives the electric power efficiently. Details of a wireless power transmission and power reception method using this electromagnetic resonance method will be described below.

Vehicle-side electromagnetic induction coil 12 is electromagnetic inductively coupled to vehicle-side resonant coil 11 and takes out the electric power received by vehicle-side resonant coil 11. Vehicle-side electromagnetic induction coil 12 takes out the electric power from vehicle-side resonant coil 11 continuously, and thereby the electric power is continuously supplied from facility-side resonant coil 24 to vehicle-side resonant coil 11 through the electromagnetic field. As described above, the wireless power transmission and power reception method using the so-called electromagnetic resonance method is employed between power reception device 40 and power transmission device 41.

Rectifier 13 is connected to vehicle-side electromagnetic induction coil 12, and converts the alternating current supplied from vehicle-side electromagnetic induction coil 12 into a direct current and supplies the direct current to DC/DC converter 14.

DC/DC converter 14 adjusts a voltage of the direct current supplied from rectifier 13 and supplies the direct current to battery 15. It is to be noted that DC/DC converter 14 is not essential and may be omitted. In this case, external power feeding apparatus 20 is provided with a matching device for matching an impedance, which can be used in place of DC/DC converter 14.

Power control unit 16 includes a converter connected to battery 15 and an inverter connected to this converter. The converter adjusts (boosts) the direct current supplied from battery 15 and supplies the direct current to the inverter. The inverter converts the direct current supplied from the converter into an alternating current and supplies the alternating current to motor unit 17.

A three-phase AC motor or the like is, for example, used as motor unit 17, and motor unit 17 is driven by the alternating current supplied from the inverter of power control unit 16.

When electrically powered vehicle 10 is a hybrid vehicle, electrically powered vehicle 10 further includes an engine and a power split device, and motor unit 17 includes a motor generator that functions mainly as a generator, and a motor generator that functions mainly as a motor.

As described above, the wireless power transmission and power reception method using the resonance method through the electromagnetic field is employed between power reception device 40 and power transmission device 41 according to the first embodiment, and power transmission device 41 and power reception device 40 resonate with each other through the electromagnetic field. "Resonate through the electromagnetic field" herein refers to a concept including both resonance through the magnetic field and resonance through the electric field. Although an example in which power reception device 40 and power transmission device 41 resonate with each other mainly through the magnetic field is described in the present embodiment, the present invention also includes resonance through the electric field, of course.

Fig. 2 is a schematic view for describing the principle of power transmission and power reception by the resonance method, and the principle of power transmission and power reception by the resonance method will be described with reference to this Fig. 2.

Referring to Fig. 2, according to this resonance method, as in the case where two tuning forks resonate with each other, two LC resonant coils having the same natural frequency resonate with each other in the electromagnetic field (near field), which causes the electric power to be transferred from one of the coils to the other of the coils through the electromagnetic field.

Specifically, a primary coil 32 is connected to a high-frequency power supply 31 to supply the electric power having a high-frequency of 1 MHz to several tens of MHz to a primary resonant coil 33 magnetically coupled to primary coil 32 by electromagnetic induction. Primary resonant coil 33 is a serial LC resonator consisting of an inductance and a stray capacitance of the coil itself (including a capacitance of a capacitor when the capacitor is connected to the coil), and resonates through the electromagnetic field (near field) with a secondary resonant coil 34 having the same resonance frequency as that of primary resonant coil 33. This causes the energy (electric power) to be transferred from primary resonant coil 33 through the electromagnetic field to secondary resonant coil 34. The energy (electric power) transferred to secondary resonant coil 34 is taken out by a secondary coil 35 magnetically coupled to secondary resonant coil 34 by electromagnetic induction, and supplied to a load 36. It is to be noted that the power transmission by the resonance method is implemented when a Q value showing the intensity of the resonance between primary resonant coil 33 and secondary resonant coil 34 is greater than, for example, 100.

The correspondence relationship between the configuration shown in Fig. 2 and the configuration shown in Fig. 1 will now be described. AC power supply 21 and high-frequency power driver 22 shown in Fig. 1 correspond to high-frequency power supply 31 shown in Fig. 2. In addition, facility-side electromagnetic induction coil 23 shown in Fig. 1 corresponds to primary coil 32 shown in Fig. 2. Furthermore, facility-side resonant coil 24 and facility-side capacitor 25 shown in Fig. 1 correspond to primary resonant coil 33 and the stray capacitance of primary resonant coil 33 shown in Fig. 2, respectively.

Vehicle-side resonant coil 11 and vehicle-side capacitor 19 shown in Fig. 1 correspond to secondary resonant coil 34 and the stray capacitance of secondary resonant coil 34 shown in Fig. 2, respectively.

Vehicle-side electromagnetic induction coil 12 shown in Fig. 1 corresponds to secondary coil 35 shown in Fig. 2. Rectifier 13, DC/DC converter 14 and battery 15 shown in Fig. 1 correspond to load 36 shown in Fig. 2, respectively.

Furthermore, in the wireless power transmission and power reception method according to the first embodiment, the power transmission and power reception efficiency is enhanced by using the near field (evanescent field) where "electrostatic field" of the electromagnetic field is dominant.

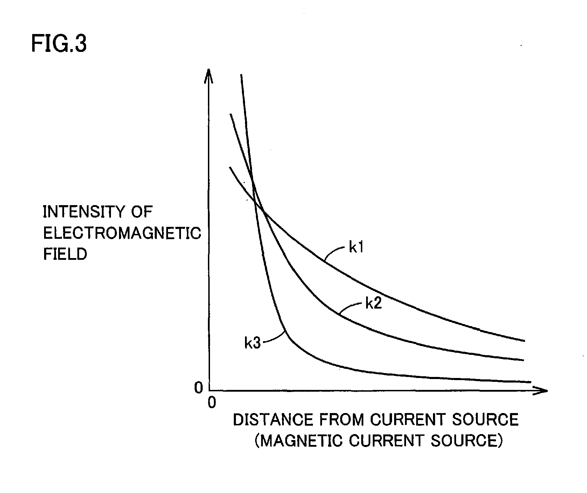

Fig. 3 is a diagram showing the relationship between the distance from a current source (a magnetic current source) and the intensity of the electromagnetic field. Referring to Fig. 3, the electromagnetic field includes three components. A curve k1 represents a component inversely proportional to the distance from the wave source and is referred to as a "radiation electric field". A curve k2 represents a component inversely proportional to the square of the distance from the wave source and is referred to as an "induction electric field". Furthermore, a curve k3 represents a component inversely proportional to the cube of the distance from the wave source and is referred to as an "electrostatic field".

"Electrostatic field" is a region where the intensity of the electromagnetic wave sharply decreases in accordance with the distance from the wave source. In the resonance method, the near field (evanescent field) where this "electrostatic field" is dominant is used to transfer the energy (electric power). In other words, in the near field where "electrostatic field" is dominant, a pair of resonators (for example, a pair of LC resonant coils) having the same natural frequency resonate with each other, to thereby transfer the energy (electric power) from one of the resonators (primary resonant coil) to the other of the resonators (secondary resonant coil). This "electrostatic field" does not allow propagation of the energy over a long distance. Accordingly, as compared to the electromagnetic wave carrying the energy (electric power) by the "radiation electric field" allowing propagation of the energy over a long distance, the resonance method allows power transmission with reduced energy loss.

As described above, as for electrically powered vehicle 10 and external power feeding apparatus 20 according to the first embodiment, resonance in the near field of the electromagnetic field is used for power transmission and power reception between power reception device 40 of electrically powered vehicle 10 and power transmission device 41 of external power feeding apparatus 20.

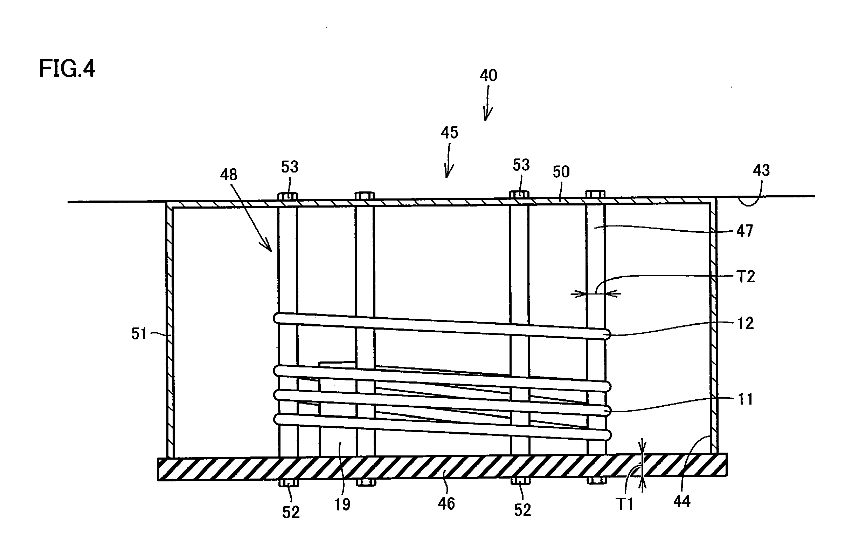

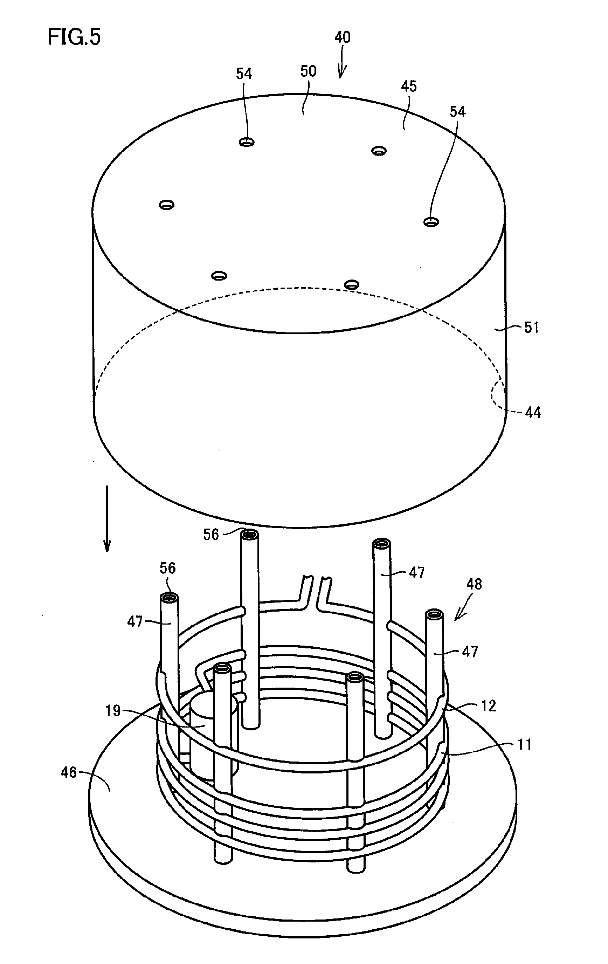

Fig. 4 is a side view, partially in section, of power reception device 40. Fig. 5 is an exploded perspective view of power reception device 40.

As shown in Fig. 4, power reception device 40 is arranged on an underside of a floor panel 43. Floor panel 43 is a member for defining a bottom surface of electrically powered vehicle 10.

In Figs. 4 and 5, power reception device 40 includes a box-shaped shield 45 having an opening 44 and a lid portion 46 formed to cover opening 44. Power reception device 40 further includes vehicle-side resonant coil 11, vehicle-side electromagnetic induction coil 12, vehicle-side capacitor 19, and a holding member 48 supporting vehicle-side resonant coil 11 and vehicle-side electromagnetic induction coil 12, arranged within shield 45.

Shield 45 includes a top plate portion (main surface portion) 50 and a circumferential wall portion 51 connected to a circumferential edge of top plate portion 50, and opening 44 is formed in a portion opposite to top plate portion 50. Shield 45 is made of a metal material and the like that can reflect and/or absorb electromagnetic waves.

Lid portion 46 is fixed to an opening edge of circumferential wall portion 51. Lid portion 46 and shield 45 constitute a housing that contains vehicle-side resonant coil 11 and vehicle-side electromagnetic induction coil 12.

Holding member 48 includes a plurality of support shaft portions 47 arranged along vehicle-side resonant coil 11. The plurality of support shaft portions 47 are annularly arranged, and vehicle-side resonant coil 11 and vehicle-side electromagnetic induction coil 12 are attached to an outer circumference of the plurality of annularly arranged support shaft portions 47. It is to be noted that support shaft portion 47 is provided with grooves and the like to which vehicle-side electromagnetic induction coil 12 and vehicle-side resonant coil 11 are attached.

An area of portions where vehicle-side resonant coil 11 is in contact with support shaft portions 47 is smaller than an area of portions where vehicle-side resonant coil 11 is not in contact with support shaft portions 47. As a result, there can be reduced a dielectric loss that occurs in the contact portions between support shaft portions 47 and vehicle-side resonant coil 11 at the time of power reception. In vehicle-side electromagnetic induction coil 12 as well, an area of portions where vehicle-side electromagnetic induction coil 12 is in contact with support shaft portions 47 is smaller than an area of portions where vehicle-side electromagnetic induction coil 12 is not in contact with support shaft portions 47.

Support shaft portion 47 and lid portion 46 are both made of a resin material, and a dielectric tangent of the resin material forming support shaft portion 47 is smaller than a dielectric tangent of the resin material forming lid portion 46. Support shaft portion 47 is made of the resin material such as, for example, Teflon (registered trademark) and polyvinyl chloride. Lid portion 46 is made of, for example, an FRP resin and the like. It is to be noted that the FRP resin is formed by curing an epoxy resin or a polyester resin with glass fibers, carbon clothes or the like. Since the dielectric tangent of support shaft portion 47 is low, heat generation in support shaft portion 47 at the time of power reception due to the high-frequency current flowing through vehicle-side resonant coil 11 can be suppressed, and the power reception efficiency when vehicle-side resonant coil 11 receives the electric power from facility-side resonant coil 24 can be enhanced.

Similarly, heat generation in support shaft portion 47 due to the high-frequency current flowing through vehicle-side electromagnetic induction coil 12 can be suppressed, and the power reception efficiency of power reception device 40 as a whole can be enhanced.

Support shaft portion 47 is connected to lid portion 46 and top plate portion 50 by a bolt 52 and a bolt 53.

Since the plurality of support shaft portions 47 support lid portion 46 and top plate portion 50, the stiffness of the housing formed by shield 45 and lid portion 46 is high, and deformation of shield 45 can be suppressed even when the external force is applied from outside the housing.

As shown in Fig. 5, top plate portion 50 of shield 45 is provided with a plurality of holes 54, into each of which bolt 53 shown in Fig. 4 is inserted. One end of support shaft portion 47 is also provided with a hole 56. Hole 56 is provided with a screw portion that screws with a screw portion formed on a shaft portion of bolt 53. Lid portion 46 is also provided with a plurality of holes, and the other end of support shaft portion 47 is also provided with a hole having a screw portion on an inner circumferential surface thereof. A shaft portion of bolt 52 is inserted into the hole formed in lid portion 46 and screws with the screw portion of the hole formed in support shaft portion 47.

A strength of the resin material forming lid portion 46 is higher than a strength of the resin material forming support shaft portion 47. As a result, even when the external force that presses lid portion 46 upwardly is applied, penetration of support shaft portion 47 through lid portion 46 can be suppressed.

Furthermore, a thickness T1 of lid portion 46 is larger than a width T2 of support shaft portion 47. As a result, even when the external force is applied to lid portion 46, damage of lid portion 46 can be suppressed. Width T2 of support shaft portion 47 refers to an average value of a double of a distance between a center and an outer circumferential edge in a cross section perpendicular to the length direction of support shaft portion 47. It is to be noted that in the present embodiment, support shaft portion 47 is formed cylindrically and width T2 refers to a diameter of the cross section of support shaft portion 47.

Width T2 of support shaft portion 47 may be larger than thickness T1 of lid portion 46. In this case, the stiffness of the housing formed by lid portion 46 and shield 45 becomes high, and deformation of the housing can be suppressed even when the external force is applied to lid portion 46 from outside.

Although shield 45 is exposed to the outside in the example shown in Fig. 4, an outer circumferential surface of shield 45 may be covered with a resin portion. In this case, thickness T1 of lid portion 46 and width T2 of support shaft portion 47 are larger than a thickness of the resin portion that covers the outer circumferential surface of shield 45.

A distance between vehicle-side resonant coil 11 and lid portion 46 is smaller than a distance between vehicle-side resonant coil 11 and top plate portion 50 as well as circumferential wall portion 51. Therefore, a distance between vehicle-side resonant coil 11 and facility-side resonant coil 24 can be shortened and the power transfer efficiency between facility-side resonant coil 24 and vehicle-side resonant coil 11 can be enhanced.

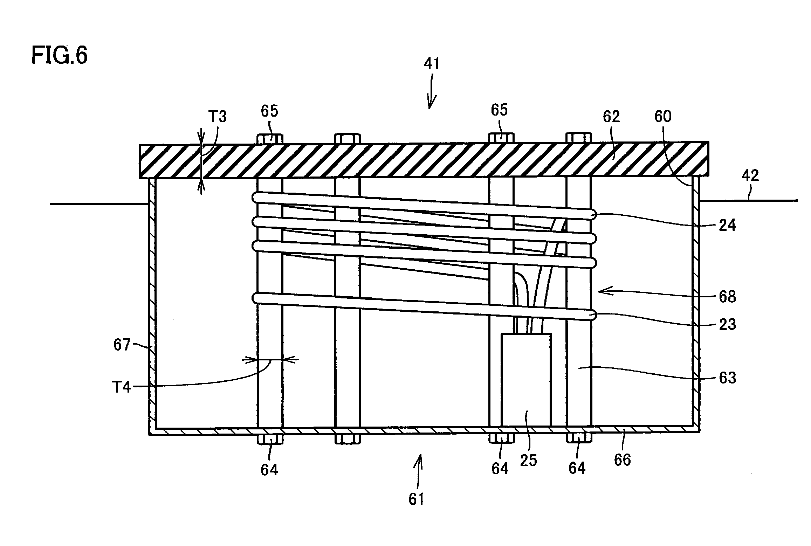

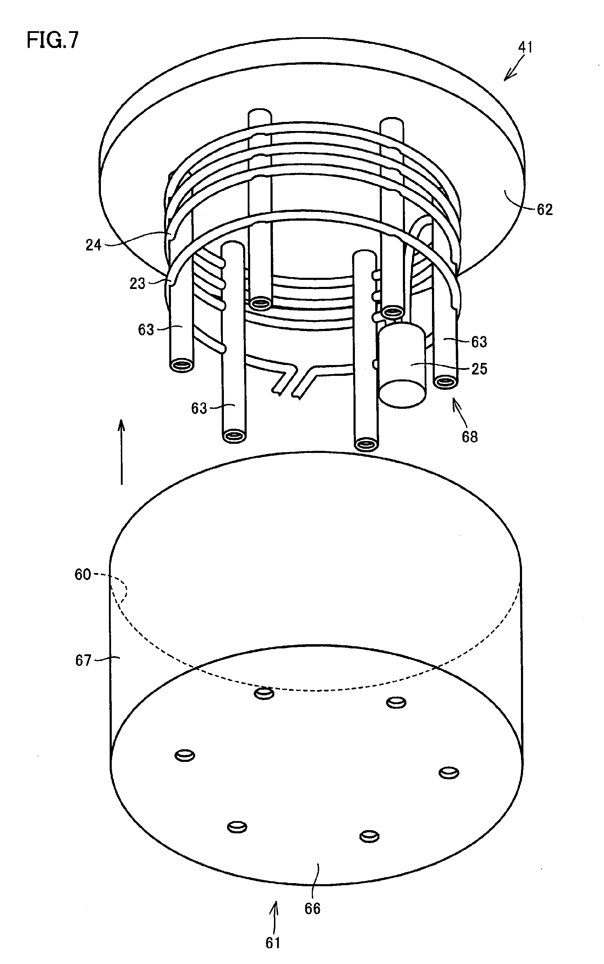

Fig. 6 is a side view, partially in section, schematically showing power transmission device 41. Fig. 7 is an exploded perspective view of power transmission device 41.

As shown in these Figs. 6 and 7, power transmission device 41 is embedded in the ground of parking space 42, and an upper surface of power transmission device 41 is exposed from the ground. Although power transmission device 41 is provided such that a part thereof protrudes from the ground in the example shown in Fig. 6, power transmission device 41 may be embedded in the ground.

Power transmission device 41 includes a box-shaped shield 61 having an opening 60 and a lid portion 62 formed to cover opening 60. Power transmission device 41 also includes facility-side electromagnetic induction coil 23, facility-side resonant coil 24, a holding member 68 supporting facility-side electromagnetic induction coil 23 and facility-side resonant coil 24, and facility-side capacitor 25 connected to opposing ends of facility-side capacitor 25, arranged within shield 61.

Shield 61 includes a bottom surface portion (main surface portion) 66 and a circumferential wall portion 67 formed to rise upwardly from an outer circumferential edge of bottom surface portion 66, and most of shield 61 is embedded at least in the ground. Therefore, an outer circumferential surface of shield 61 is supported by the ground, and deformation of shield 61 can be suppressed even when a large load is applied to lid portion 62.

Holding member 68 includes a plurality of support shaft portions 63. Support shaft portions 63 are arranged annularly. Facility-side resonant coil 24 and facility-side electromagnetic induction coil 23 are attached to an outer circumference of annularly arranged support shaft portions 63.

Support shaft portion 63 is provided with a groove in which facility-side electromagnetic induction coil 23 is fit, and a groove in which facility-side resonant coil 24 is fit. An area of portions where facility-side resonant coil 24 is in contact with support shaft portions 63 is smaller than an area of portions where facility-side resonant coil 24 is not in contact with support shaft portions 63. As a result, a dielectric loss at the time of power transmission is reduced.

A lower end of support shaft portion 63 is fixed to bottom surface portion 66 by a bolt 64, and an upper end of support shaft portion 63 is fixed to lid portion 62 by a bolt 65. In this way, support shaft portion 63 is connected to lid portion 62 and bottom surface portion 66, and support shaft portions 63 support lid portion 62 and bottom surface portion 66.

A thickness T3 of lid portion 62 is larger than thickness T1 of lid portion 46 shown in Fig. 4, and a stiffness of lid portion 62 is higher than a stiffness of lid portion 46. As a result, even when the large external force is applied to lid portion 62, damage of lid portion 62 can be suppressed.

A cross-sectional area of a cross section of support shaft portion 63 perpendicular to an extending direction of support shaft portion 63 is larger than a cross-sectional area of a cross section of support shaft portion 47 perpendicular to an extending direction of support shaft portion 47. In other words, a width T4 of support shaft portion 63 is larger than width T2 of support shaft portion 47 shown in Fig. 4. Therefore, a stiffness of power transmission device 41 is higher than a stiffness of power reception device 40.

In Figs. 4 and 6, a resin material forming lid portion 62 is the same as the resin material forming lid portion 46, and a resin material forming support shaft portion 63 is the same as the resin material forming support shaft portion 47. As a result, a dielectric tangent of support shaft portion 63 is low and the power transmission efficiency is enhanced.

### (Second Embodiment)

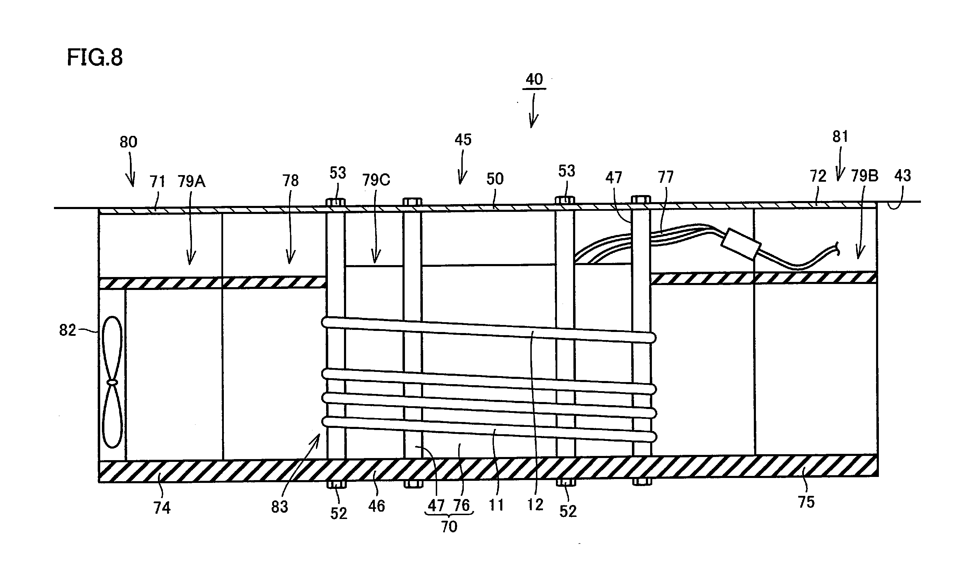

Power reception device 40, power transmission device 41 and a power transfer system according to a second embodiment will be described with reference to Figs. 8 to 11. The same reference characters are assigned to the configurations shown in Figs. 8 to 11 that are the same as or corresponding to the configurations shown in Figs. 1 to 7 above, and description thereof will not be repeated.

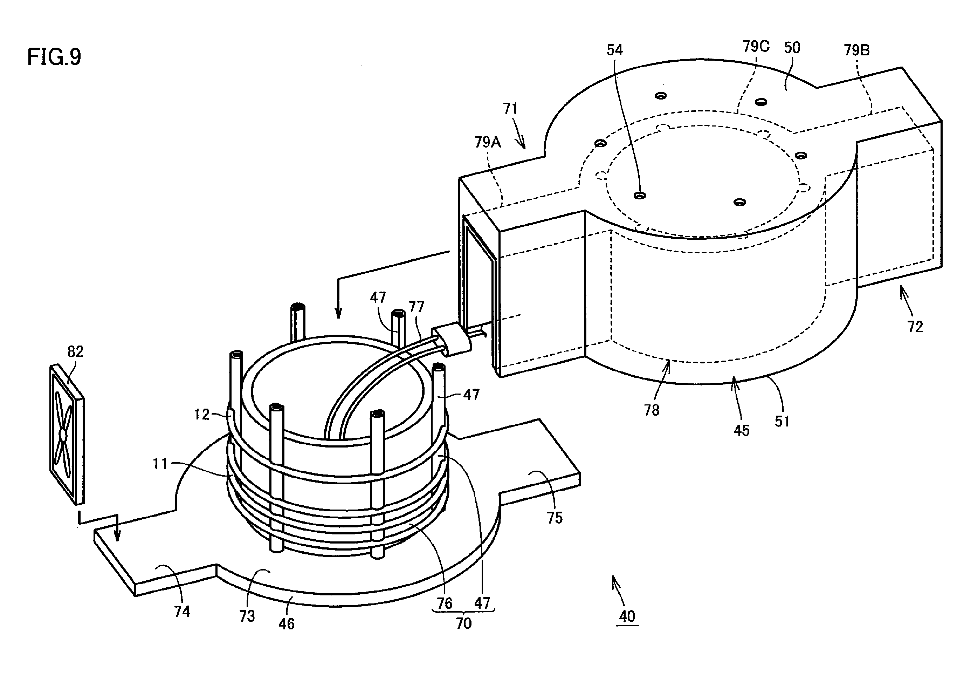

Fig. 8 is a side view, partially in section, showing power reception device 40 according to the second embodiment. Fig. 9 is an exploded perspective view of power reception device 40.

As shown in these Figs. 8 and 9, power reception device 40 includes: shield 45 formed to have an opened lower surface; lid portion 46 provided to cover the opening of shield 45; a holding member 70 provided within shield 45; vehicle-side resonant coil 11 and vehicle-side electromagnetic induction coil 12 provided on an outer circumferential surface of holding member 70; and a cooling medium guide wall 78 arranged between an inner circumferential surface of shield 45 and vehicle-side resonant coil 11.

Holding member 70 includes a plurality of annularly arranged support shaft portions 47, and an inner wall portion 76 arranged inside annularly arranged support shaft portions 47. Inner wall portion 76 is annularly formed to connect inner circumferential portions of the plurality of annularly arranged support shaft portions 47.

Vehicle-side resonant coil 11 and vehicle-side electromagnetic induction coil 12 are attached to an outer circumference of the plurality of annularly arranged support shaft portions 47. Shield 45 includes top plate portion 50, circumferential wall portion 51 formed to hang down from a circumferential edge of top plate portion 50, and a protruding portion 71 and a protruding portion 72 formed on circumferential wall portion 51.

Protruding portion 71 and protruding portion 72 are formed to protrude outwardly from circumferential wall portion 51. Protruding portion 71 and protruding portion 72 are formed at positions opposite to each other. Protruding portion 71 includes an upper surface portion and a side surface portion, and protruding portion 71 is formed such that a lower surface side thereof is opened.

Lid portion 46 includes a main body portion 73 closing the opening of circumferential wall portion 51, and protruding portions 74 and 75 protruding outwardly from an outer circumferential edge of main body portion 73.

Cooling medium guide wall 78 includes a path defining portion 79A arranged on protruding portion 74, a path defining portion 79B arranged on protruding portion 75, and a path defining portion 79C formed to cover vehicle-side resonant coil 11 and vehicle-side electromagnetic induction coil 12.

Path defining portion 79A is arranged within protruding portion 71 and is formed such that a lower surface side of path defining portion 79A is opened downwardly. Path defining portion 79B is arranged within protruding portion 72 and is formed such that a lower surface side of path defining portion 79B is opened downwardly. Path defining portion 79C is formed to run between circumferential wall portion 51 and inner wall portion 76. Protruding portion 74 closes the opening located in the lower surface of path defining portion 79A, and protruding portion 74 and path defining portion 79A form a supply path 80.

Protruding portion 75 closes the opening located in the lower surface of path defining portion 79B, and protruding portion 75 and path defining portion 79B form an exhaust path 81. Main body portion 73 closes the opening of path defining portion 79C, and thereby a cooling medium flow path 83 through which cooling air can flow between inner wall portion 76 and path defining portion 79C is formed.

The cooling air from a fan 82 that functions as a cooling medium supply portion passes through supply path 80 and reaches cooling medium flow path 83. The cooling air passes through cooling medium flow path 83, and thereby vehicle-side resonant coil 11 and vehicle-side electromagnetic induction coil 12 are cooled excellently. The cooling air that has cooled vehicle-side resonant coil 11 and vehicle-side electromagnetic induction coil 12 is then exhausted outside from exhaust path 81.

As shown in Fig. 8, an upper end of support shaft portion 47 is fixed to top plate portion 50 by bolt 53, and a lower end of support shaft portion 47 is fixed to lid portion 46 by bolt 52. In this way, in power reception device 40 according to the second embodiment as well, support shaft portion 47 is connected to top plate portion 50 and lid portion 46, and top plate portion 50 and lid portion 46 are supported by support shaft portions 47. As a result, even when the external force is applied to power reception device 40, deformation of lid portion 46 and top plate portion 50 can be suppressed.

Support shaft portion 47 is formed to protrude outwardly from an outer circumferential surface of inner wall portion 76. Vehicle-side resonant coil 11 and vehicle-side electromagnetic induction coil 12 are arranged on the outer circumference of annularly arranged support shaft portions 47, and vehicle-side resonant coil 11 and vehicle-side electromagnetic induction coil 12 are located apart from inner wall portion 76.

Therefore, an area of portions where vehicle-side resonant coil 11 and vehicle-side electromagnetic induction coil 12 are in contact with holding member 70 is small and a dielectric loss at the time of power reception is reduced.

Inner wall portion 76 is fixed to each support shaft portion 47. Inner wall portion 76 and support shaft portion 47 are both made of a resin material, and inner wall portion 76 and support shaft portion 47 are formed integrally. When support shaft portion 47 and inner wall portion 76 are formed separately, support shaft portion 47 and inner wall portion 76 may be fixed to each other by a bolt and the like.

A lower end of inner wall portion 76 is in contact with lid portion 46, and an upper end of inner wall portion 76 is located more downward than top plate portion 50. Therefore, in a portion of holding member 70 near top plate portion 50, a gap is formed between support shaft portions 47. A wiring 77 connected to vehicle-side electromagnetic induction coil 12 is drawn out from the gap formed between support shaft portions 47.

Since the lower end of inner wall portion 76 is in contact with lid portion 46, an area of lid portion 46 supported by holding member 70 is large. As a result, even when the large external force is applied to lid portion 46, deformation of lid portion 46 can be suppressed.

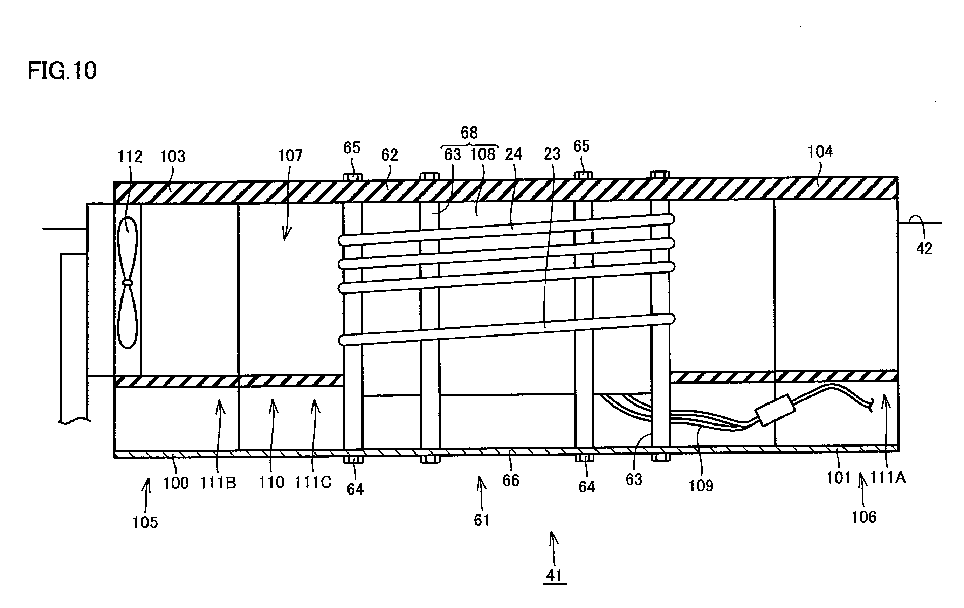

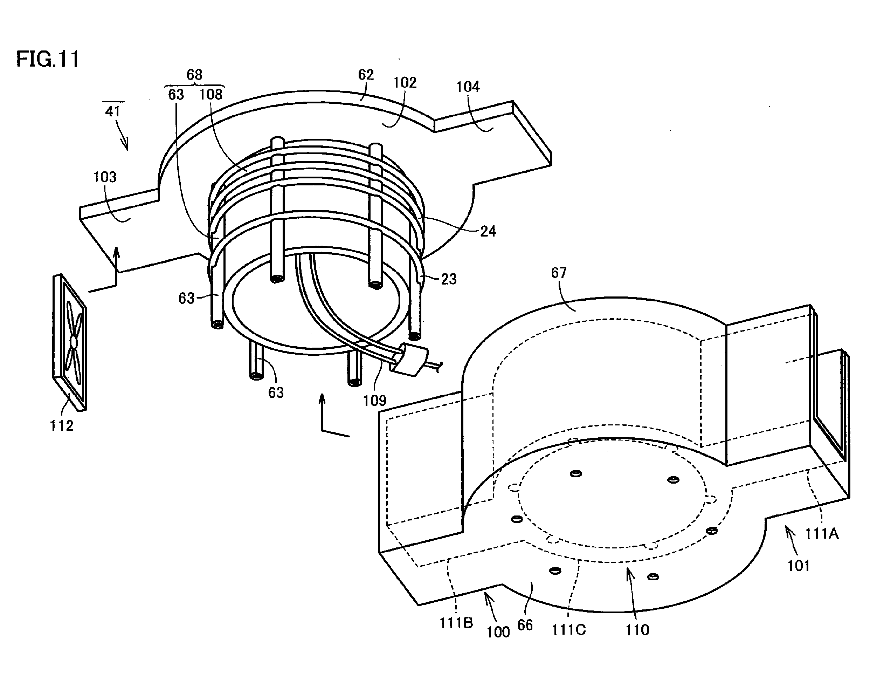

Fig. 10 is a side view, partially in section, of power transmission device 41. Fig. 11 is an exploded perspective view of power transmission device 41.

As shown in this Fig. 10, power transmission device 41 includes: shield 61 formed to have an opened upper portion; lid portion 62 formed to cover the opening of shield 61; holding member 68 provided within shield 61; facility-side electromagnetic induction coil 23 and facility-side resonant coil 24 provided on an outer circumferential surface of holding member 68; and a cooling medium guide wall 110.

Holding member 68 includes a plurality of annularly arranged support shaft portions 63, and a cylindrically formed inner wall portion 108. Facility-side electromagnetic induction coil 23 and facility-side resonant coil 24 are attached to the outer circumference of the plurality of annularly arranged support shaft portions 63. Inner wall portion 108 is arranged inside annularly arranged support shaft portions 63 and is formed to connect support shaft portions 63.

Shield 61 includes bottom surface portion 66, circumferential wall portion 67 formed at the outer circumferential edge of bottom surface portion 66, and a protruding portion 100 and a protruding portion 101 formed on circumferential wall portion 67. Protruding portion 100 and protruding portion 101 are formed to protrude from circumferential wall portion 67. Protruding portion 100 includes a bottom surface portion and a side surface portion, and is formed such that an upper surface side of protruding portion 100 is opened. Similarly, protruding portion 101 also includes a bottom surface portion and a side surface portion, and is formed such that an upper surface side of protruding portion 101 is opened.

Lid portion 62 includes a main body portion 102 formed to close the opening of circumferential wall portion 67, and protruding portions 103 and 104 formed to protrude outwardly from an outer circumferential edge of main body portion 102. Cooling medium guide wall 110 includes a path defining portion 111A arranged within protruding portion 101, a path defining portion 111B arranged within protruding portion 100, and a path defining portion 111C arranged around inner wall portion 108.

Path defining portion 111A, path defining portion 111B and path defining portion 111C are formed such that upper portions thereof are opened. Protruding portion 104 closes the opening of path defining portion 111A, and thereby a supply path 105 is formed. Protruding portion 103 closes the opening of path defining portion 111B, and thereby an exhaust path 106 is formed. Main body portion 102 of lid portion 62 closes the opening of path defining portion 111C, and thereby a cooling medium flow path 107 through which the cooling air can flow between inner wall portion 108 and path defining portion 111C is formed.

The cooling air is supplied from a fan 112 into supply path 105. The cooling air that has been supplied into supply path 105 enters cooling medium flow path 107. Since the cooling air enters cooling medium flow path 107, facility-side electromagnetic induction coil 23 and facility-side resonant coil 24 are cooled. The cooling air is then exhausted outside from exhaust path 106.

As shown in Fig. 10, the upper end of support shaft portion 63 is fixed to lid portion 62 by bolt 65, and the lower end of support shaft portion 63 is fixed to bottom surface portion 66 of shield 61 by bolt 64. In this way, in power transmission device 41 according to the second embodiment as well, lid portion 62 and shield 61 are supported by support shaft portions 63. As a result, even when the vehicle travels on lid portion 62, damage of power transmission device 41 can be suppressed.

Inner wall portion 108 is arranged inside the plurality of annularly arranged support shaft portions 63 and inner wall portion 108 is formed to connect support shaft portions 63. Therefore, support shaft portion 63 is formed to protrude from an outer circumferential surface of inner wall portion 108. Since facility-side electromagnetic induction coil 23 and facility-side resonant coil 24 are arranged on the outer circumference of support shaft portions 63, an induction loss is reduced.

Support shaft portion 63 and inner wall portion 108 are formed integrally and are both made of a resin material. Support shaft portion 63 and inner wall portion 108 may be made of different materials, and support shaft portion 63 and inner wall portion 108 may be coupled to each other by a bolt and the like. An upper end of inner wall portion 108 is in contact with lid portion 62, and a lower end of inner wall portion 108 is located more upward than bottom surface portion 66 of shield 61.

A gap is formed between a lower end of holding member 68 and bottom surface portion 66. A wiring 109 is drawn out from this gap. This wiring 109 is connected to facility-side electromagnetic induction coil 23. Since inner wall portion 108 is in contact with lid portion 62, an area of lid portion 62 supported by holding member 68 is large. As a result, even when the large load is applied to lid portion 62, significant local deformation of lid portion 62 can be suppressed.

### (Third Embodiment)

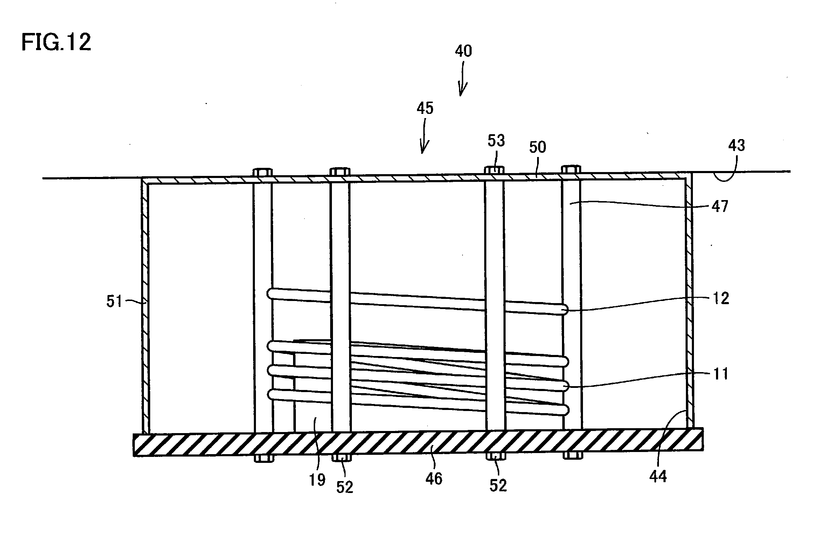

Power reception device 40 according to a third embodiment will be described with reference to Figs. 12 to 15. The same reference characters are assigned to the configurations shown in Figs. 12 to 15 that are the same as or corresponding to the configurations shown in Figs. 1 to 11 above, and description thereof will not be repeated.

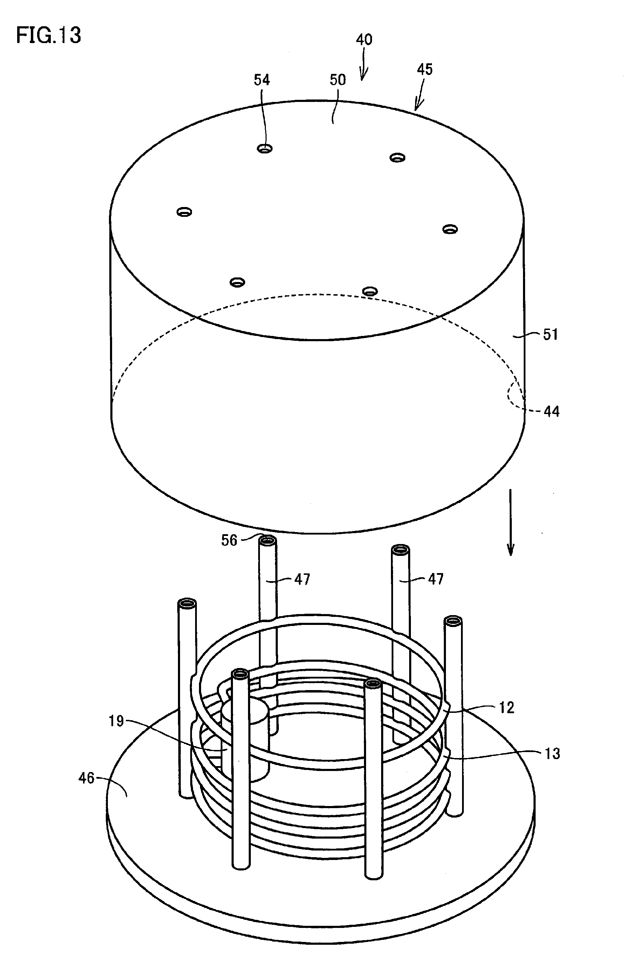

Fig. 12 is a side view, partially in section, showing power reception device 40 according to the third embodiment. Fig. 13 is an exploded perspective view of power reception device 40 shown in Fig. 12.

As shown in these Figs. 12 and 13, vehicle-side resonant coil 11 and vehicle-side electromagnetic induction coil 12 are arranged inside a plurality of annularly arranged support shaft portions 47.

In this example shown in Figs. 12 and 13 as well, an area of portions where vehicle-side resonant coil 11 and vehicle-side electromagnetic induction coil 12 are in contact with support shaft portions 47 is small, and thus, a dielectric loss at the time of power reception is reduced. Each support shaft portion 47 is fixed to lid portion 46 and top plate portion 50 by bolt 52 and bolt 53, and lid portion 46 and top plate portion 50 are supported by the plurality of support shaft portions 47. As a result, deformation of power reception device 40 is suppressed.

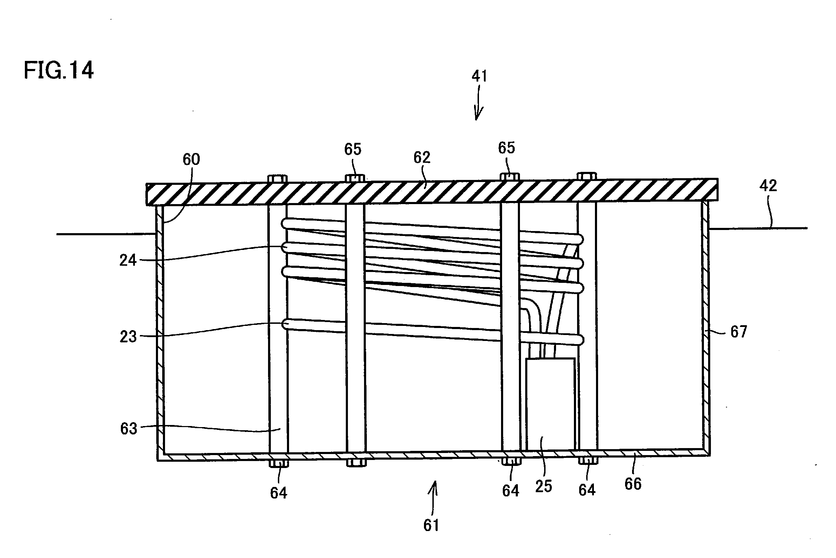

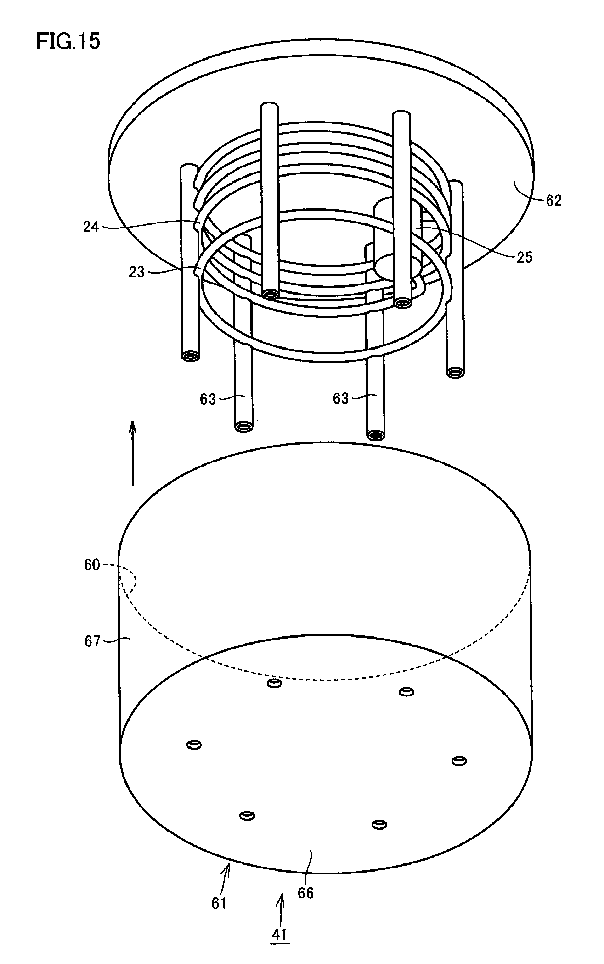

Fig. 14 is a cross-sectional view of power transmission device 41 according to the third embodiment. Fig. 15 is an exploded perspective view of power transmission device 41 according to the third embodiment. As shown in these Figs. 14 and 15, power transmission device 41 includes a plurality of annularly arranged support shaft portions 63, and facility-side electromagnetic induction coil 23 and facility-side resonant coil 24 are arranged on an inner circumference of these support shaft portions 63.

Each support shaft portion 63 is coupled to lid portion 62 and bottom surface portion 66 by bolt 64 and bolt 65. Therefore, in power transmission device 41 as well, lid portion 62 and bottom surface portion 66 are supported by the plurality of support shaft portions 63, and thus, the stiffness of a housing formed by lid portion 62 and shield 61 is high.

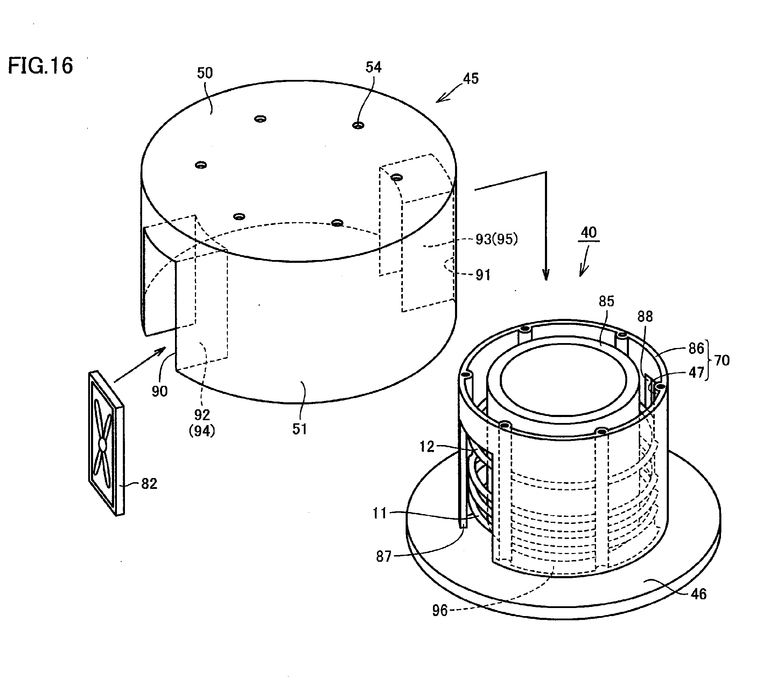

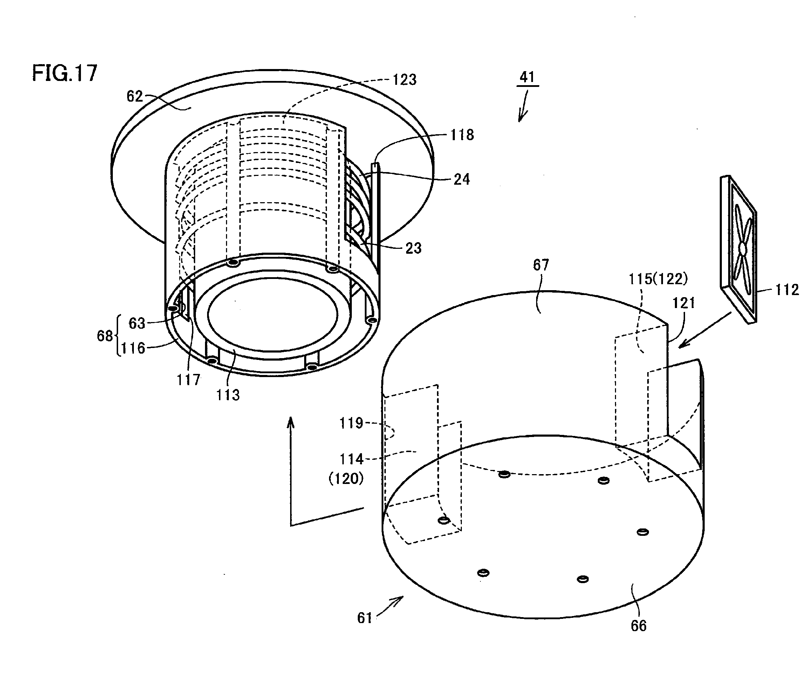

A modification of power reception device 40 and power transmission device 41 according to the present embodiment will be described with reference to Figs. 16 and 17.

Fig. 16 is an exploded perspective view of power reception device 40 according to the modification. Fig. 17 is an exploded perspective view showing power transmission device 41 according to the modification. As shown in Fig. 16, power reception device 40 includes: shield 45 having an opened lower surface; lid portion 46 closing the opening of shield 45; holding member 70 formed cylindrically; vehicle-side resonant coil 11 and vehicle-side electromagnetic induction coil 12 provided inside holding member 70; and an inner cylinder portion 85 arranged inside holding member 70.

Shield 45 includes top plate portion 50 and circumferential wall portion 51, and circumferential wall portion 51 is provided with a supply port 90 and an exhaust port 91. Supply port 90 and exhaust port 91 are formed at positions opposite to each other.

Shield 45 includes a protruding portion 92 formed to protrude inwardly from supply port 90, and a protruding portion 93 formed to protrude inwardly from exhaust port 91. Each of protruding portion 92 and protruding portion 93 includes an upper surface portion and a sidewall portion hanging down from the upper surface portion, and lower surface sides of protruding portion 92 and protruding portion 93 are opened.

Lid portion 46 closes the opening on the lower surface side of protruding portion 92, and thereby a supply path 94 is formed. Lid portion 46 closes the opening on the lower surface side of protruding portion 93, and thereby an exhaust path 95 is formed.

Supply port 90 of supply path 94 is provided with fan 82. By driving fan 82, the external air can be supplied into power reception device 40.

Holding member 70 includes a plurality of annularly arranged support shaft portions 47, and an outer cylinder portion 86 provided on the outer circumference of annularly arranged support shaft portions 47.

Outer cylinder portion 86 is formed to connect support shaft portions 47 spaced apart from one another, and support shaft portion 47 is formed to protrude inwardly from an inner circumferential surface of outer cylinder portion 86.

Support shaft portion 47 is fixed to lid portion 46 and top plate portion 50 by a bolt, and lid portion 46 and top plate portion 50 are supported by support shaft portions 47. Vehicle-side resonant coil 11 and vehicle-side electromagnetic induction coil 12 are arranged inside annularly arranged support shaft portions 47. In this example shown in Fig. 16 as well, an area of portions where vehicle-side resonant coil 11 and vehicle-side electromagnetic induction coil 12 are in contact with support shaft portions 47 is small, and thus, a dielectric loss at the time of power reception is reduced.

Vehicle-side resonant coil 11 and vehicle-side electromagnetic induction coil 12 are arranged inside annularly arranged support shaft portions 47, and vehicle-side resonant coil 11 and vehicle-side electromagnetic induction coil 12 are supported by support shaft portions 47.

A circumferential surface of outer cylinder portion 86 is provided with a supply port 87 and an exhaust port 88. Supply port 87 and exhaust port 88 are formed at positions opposite to each other.

Supply path 94 is connected to supply port 87, and exhaust path 95 is connected to exhaust port 88.

Inner cylinder portion 85 is arranged more inward than vehicle-side resonant coil 11 and vehicle-side electromagnetic induction coil 12, and is formed cylindrically.

Inner cylinder portion 85 and holding member 70 are spaced apart from each other, and a path 96 through which air can flow is formed between inner cylinder portion 85 and holding member 70. Supply path 94 is connected to this path 96 via supply port 87, and exhaust path 95 is connected to path 96 via exhaust port 88.

The cooling air supplied from fan 82 into power reception device 40 passes through supply path 94 and supply port 87, and enters path 96. Since the cooling air passes through path 96, vehicle-side resonant coil 11 and vehicle-side electromagnetic induction coil 12 are cooled by the cooling air. The cooling air then passes through exhaust port 88 and exhaust path 95 and is exhausted outside power reception device 40. As shown in Fig. 17, power transmission device 41 includes: shield 61 having an opening in an upper surface thereof; lid portion 62 arranged to close the opening of shield 61; holding member 68 arranged within shield 61; facility-side electromagnetic induction coil 23 and facility-side resonant coil 24 arranged on an inner circumference of holding member 68; and an inner wall portion 113 arranged on an inner circumferential side of facility-side resonant coil 24.

Shield 61 includes a protruding portion 114 and a protruding portion 115 protruding inwardly from circumferential wall portion 67. Protruding portion 114 and protruding portion 115 are formed to be opposite to each other.

Holding member 68 includes a cylindrically formed outer cylinder portion 116, and a plurality of support shaft portions 63 spaced apart from one another on an inner circumferential surface of outer cylinder portion 116. Facility-side electromagnetic induction coil 23 and facility-side resonant coil 24 are arranged inside annularly arranged support shaft portions 63, and facility-side electromagnetic induction coil 23 and facility-side resonant coil 24 are supported by support shaft portions 63.

Each support shaft portion 63 is formed to protrude from outer cylinder portion 116. Therefore, an area of portions where facility-side electromagnetic induction coil 23 is in contact with support shaft portions 63 is smaller than an area of portions where facility-side electromagnetic induction coil 23 is not in contact with holding member 68.

Therefore, in the example shown in Fig. 17 as well, a dielectric loss that occurs in support shaft portions 63 is reduced. Furthermore, in the example shown in Fig. 17 as well, holding member 68 is formed to support lid portion 62 and bottom surface portion 66 of shield 61. As a result, even when the large external force is applied to lid portion 62, for example, deformation of power transmission device 41 can be suppressed.

Holding member 68 is provided with an opening 117 to which an end of protruding portion 114 is connected, and an opening 118 to which an end of protruding portion 115 is connected. A tip of protruding portion 115 is connected to opening 118 and lid portion 62 closes the upwardly opened opening of protruding portion 115, and thereby a supply path 122 is formed.

A tip of protruding portion 114 is connected to opening 117 and lid portion 62 closes the upwardly opened opening of protruding portion 114, and thereby an exhaust path 120 is formed. Outer cylinder portion 116 and inner wall portion 113 form an annularly extending gap. This gap is opened upwardly and downwardly. Bottom surface portion 66 of shield 61 closes the lower opening of the gap, and lid portion 62 closes the upper opening of the gap. As a result, an annularly extending cooling medium flow path 123 is formed.

Fan 112 is attached to an opening 121 of supply path 122 and the cooling air is supplied into power transmission device 41 by fan 112. The cooling air from fan 112 passes through supply path 122 and enters cooling medium flow path 123 through opening 118. The cooling air then passes through cooling medium flow path 123 and cools facility-side electromagnetic induction coil 23 and facility-side resonant coil 24. The cooling air then enters exhaust path 120 through opening 117, and is exhausted outside.

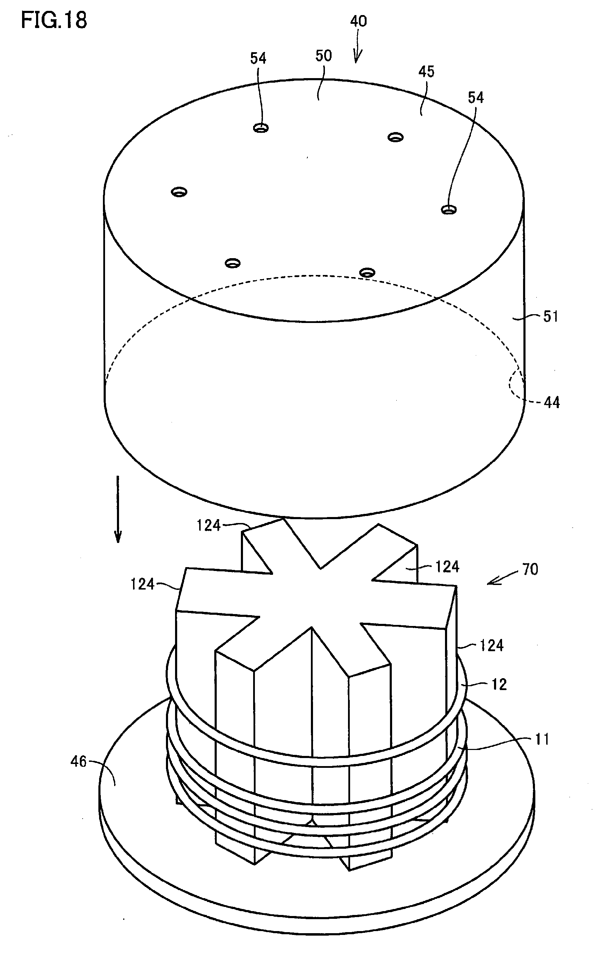

Fig. 18 is an exploded perspective view showing power reception device 40 according to a second modification. In this example shown in Fig. 18, holding member 70 is formed radially and includes a plurality of annularly arranged coil support portions 124. Although six coil support portions 124 are radially provided in this example shown in Fig. 18, the number of coil support portions 124 is not limited thereto as long as the plurality of coil support portions 124 are provided. For example, three, four or five coil support portions 124 may be provided.

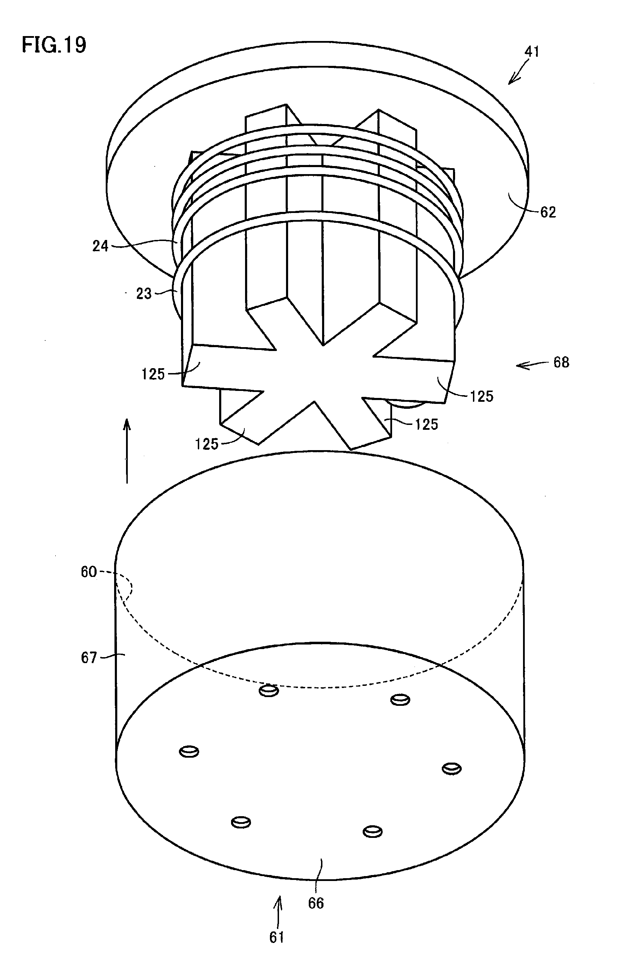

Fig. 19 is an exploded perspective view showing power transmission device 41 according to the second modification. In this example shown in Fig. 19, holding member 68 is formed radially and includes a plurality of radially arranged coil support portions 125. Although six coil support portions 125 are provided in this example shown in Fig. 19, the number of coil support portions 125 is not limited thereto as long as the plurality of coil support portions 125 are provided. For example, three, four or five coil support portions 125 may be provided.

It should be understood that the embodiments disclosed herein are illustrative and non-restrictive in every respect. The scope of the present invention is defined by the terms of the claims, and is intended to include any modifications within the scope and meaning equivalent to the terms of the claims. Further, the above numeric values or the like are merely provided for illustrative purposes, and the present invention is not limited to the aforementioned numeric values and ranges.

### INDUSTRIAL APPLICABILITY

The present invention is applicable to the power reception device, the power transmission device and the power transfer system.

### REFERENCE SIGNS LIST

10 electrically powered vehicle; 11 vehicle-side resonant coil; 12 vehicle-side electromagnetic induction coil; 13 rectifier; 14 converter; 15 battery; 16 power control unit; 17 motor unit; 19 vehicle-side capacitor; 20 external power feeding apparatus; 21 AC power supply; 22 high-frequency power driver; 23 facility-side electromagnetic induction coil; 24 facility-side resonant coil; 25 facility-side capacitor; 26 control unit; 31 high-frequency power supply; 32 primary coil; 33 primary resonant coil; 34 secondary resonant coil; 35 secondary coil; 36 load; 40 vehicle-side coil unit; 41 facility-side coil unit; 42 parking space; 43 floor panel; 44, 60 opening; 45, 61 shield; 46, 62 lid portion; 47, 63 support shaft portion; 50 top plate portion; 51, 67 circumferential wall portion; 52, 53, 64, 65 bolt; 54, 56 hole; 66 bottom surface portion; 70 cylindrical wall portion; 71, 72, 74, 75, 92, 93 protruding portion; 73 main body portion; 76 inner wall portion; 77 wiring; 80, 94 supply path; 81, 95 exhaust path; 82 fan; 85 inner cylinder portion; 86 outer cylinder portion; 87, 90 supply port; 88, 91 exhaust port; 96 path

## Claims

1. A power reception device, comprising:
a shield (45) including a main surface portion and a circumferential wall portion connected to a circumferential edge of said main surface portion, and having an opening in a position opposite to said main surface portion;
a lid portion (46) formed to cover said opening;
a mounted resonant portion (27) arranged within said shield (45), and resonating, through an electromagnetic field, with a facility-side resonant portion (28) provided in an external facility; and
a holding portion (48) connecting said lid portion (46) and said main surface portion, and supporting said mounted resonant portion (27).

2. The power reception device according to claim 1, wherein
said facility-side resonant portion (28) includes a first resonant coil (24),
said mounted resonant portion (27) includes a second resonant coil (11),
said second resonant coil (11) is held by said holding portion (48), and
an area of a portion where said second resonant coil (11) is in contact with said holding portion (48) is smaller than an area of a portion where said second resonant coil (11) is not in contact with said holding portion (48).

3. The power reception device according to claim 1, wherein
said facility-side resonant portion (28) includes a first resonant coil (24),
said mounted resonant portion (27) includes a second resonant coil (11),
said holding portion (48) includes a plurality of support shaft portions arranged annularly along said second resonant coil (11), and
said second resonant coil (11) is supported by said plurality of support shaft portions.

4. The power reception device according to claim 3, wherein
said lid portion (46) is made of a first resin material,
said support shaft portions are made of a second resin material, and
a dielectric tangent of said second resin material is smaller than a dielectric tangent of said first resin material.

5. The power reception device according to claim 3, wherein
said lid portion (46) is made of a first resin material,
said support shaft portions are made of a second resin material, and
a strength of said first resin material is higher than a strength of said second resin material.

6. The power reception device according to claim 3, wherein
said holding portion (48) includes the plurality of support shaft portions arranged annularly along an inner circumference of said second resonant coil (11) and supporting said second resonant coil (11), and a first wall portion formed to connect inner circumferential portions of the plurality of support shaft portions arranged annularly, and the first wall portion extending in an arrangement direction of the support shaft portions,
the power reception device further comprising:
a second wall portion arranged between an inner circumferential surface of said shield (45) and said second resonant coil (11); and
a cooling medium supply portion for supplying a cooling medium to a path formed between said first wall portion and said second wall portion.

7. The power reception device according to claim 3, wherein
said holding portion (48) includes the plurality of support shaft portions arranged annularly along an outer circumference of said second resonant coil (11) and supporting said second resonant coil (11), and a third wall portion formed to connect outer circumferential portions of the plurality of support shaft portions arranged annularly, and the third wall portion extending in an arrangement direction of the support shaft portions,
the power reception device further comprising:
a fourth wall portion arranged inside said third wall portion and spaced apart from said third wall portion; and
a cooling medium supply portion for supplying a cooling medium to a path formed between said third wall portion and said fourth wall portion.

8. A power transmission device, comprising:
a shield (61) including a main surface portion and a circumferential wall portion connected to a circumferential edge of said main surface portion, and having an opening in a position opposite to said main surface portion;
a lid portion (62) formed to cover said opening;
a facility-side resonant portion (28) arranged within said shield (61), and resonating, through an electromagnetic field, with a mounted resonant portion (27) mounted on a vehicle; and
a holding portion (68) connecting said lid portion (62) and said main surface portion, and supporting said facility-side resonant portion (28).

9. The power transmission device according to claim 8, wherein
said facility-side resonant portion (28) includes a first resonant coil (24),
said mounted resonant portion (27) includes a second resonant coil (11), and
an area of a portion where said first resonant coil (24) is in contact with said holding portion (68) is smaller than an area of a portion where said first resonant coil (24) is not in contact with said holding portion (68),

10. The power transmission device according to claim 8, wherein
said facility-side resonant portion (28) includes a first resonant coil (24),
said mounted resonant portion (27) includes a second resonant coil (11),
said holding portion (68) includes a plurality of support shaft portions arranged annularly along said first resonant coil (24), and
said first resonant coil (24) is supported by said plurality of support shaft portions.

11. The power transmission device according to claim 10, wherein
said lid portion (62) is made of a first resin material,
said support shaft portions are made of a second resin material, and
a dielectric tangent of said second resin material is smaller than a dielectric tangent of said first resin material.

12. The power transmission device according to claim 10, wherein
said lid portion (62) is made of a first resin material,
said support shaft portions are made of a second resin material, and
a strength of said first resin material is higher than a strength of said second resin material.

13. The power transmission device according to claim 10, wherein
said holding portion (68) includes the plurality of support shaft portions arranged annularly along an inner circumference of said first resonant coil (24) and supporting said first resonant coil (24), and a first wall portion formed to connect inner sides of the plurality of support shaft portions arranged annularly, and the first wall portion extending in an arrangement direction of the support shaft portions,
the power transmission device further comprising:
a second wall portion arranged between an inner circumferential surface of said shield (61) and said facility-side resonant portion (28); and
a cooling medium supply portion for supplying a cooling medium to a path formed between said first wall portion and said second wall portion.

14. The power transmission device according to claim 10, wherein
said holding portion (68) includes the plurality of support shaft portions arranged annularly along an outer circumference of said first resonant coil (24) and supporting said first resonant coil (24), and a third wall portion formed to connect outer sides of the plurality of support shaft portions arranged annularly, and the third wall portion extending in an arrangement direction of the support shaft portions,
the power transmission device further comprising:
a fourth wall portion extending between an inner circumferential surface of said shield (61) and said third wall portion; and
a cooling medium supply portion for supplying a cooling medium to a path formed between said third wall portion and said fourth wall portion.

15. A power transfer system, comprising:
a power transmission device (41) having a facility-side resonant portion (28), a facility-side shield (61) containing said facility-side resonant portion (28) therein and having a first opening, a first lid member (62) formed to close said first opening, and a first holding portion (68) arranged within said facility-side shield (61) and supporting said facility-side resonant portion (28); and
a vehicle-side resonant portion (27) having a vehicle-side resonant portion (27) resonating with said facility-side resonant portion (28) through an electromagnetic field, a vehicle-side shield (45) containing said vehicle-side resonant portion (27) therein and having a second opening, a second lid member (46) formed to close said second opening, and a second holding portion (48) arranged within said vehicle-side shield (45) and supporting said vehicle-side resonant portion (27), wherein
said facility-side shield (61) includes a bottom surface portion and a first circumferential wall portion formed to rise from an outer circumferential edge of said bottom surface portion, and said first holding portion (68) is provided to support said bottom surface portion and said first lid member (62),
said vehicle-side shield (45) includes a top plate portion and a second circumferential wall portion formed to hang down from an outer circumferential edge of said top plate portion, and
said second holding portion (48) is provided to support said top plate portion and said second lid member (46).

16. The power transfer system according to claim 15, wherein
said first lid member (62) is formed to have a thickness larger than a thickness of said second lid member (46).

17. The power transfer system according to claim 15, wherein
said facility-side resonant portion (28) includes a first resonant coil (24),
said vehicle-side resonant portion (27) includes a second resonant coil (11), said first holding portion (68) includes a plurality of first support shaft portions arranged along said first resonant coil (24) and supporting said first resonant coil (24),
said second holding portion (48) includes a plurality of second support shaft portions arranged along said second resonant coil (11) and supporting said second resonant coil (11), and
a cross-sectional area of said first support shaft portions is larger than a cross-sectional area of said second support shaft portions.
